# FASCICULE DE BREVET EUROPEEN

(11) **EP 4 269 915 B1**
(45) Date de publication et mention de la délivrance du brevet: **10.09.2025**
(21) Numéro de dépôt: 23167912.7
(22) Date de dépôt: 14.04.2023
(51) Int. Cl.: F25D 13/06, F25D 29/00

(54) **PROCÉDÉ DE CONDUITE D'UN TUNNEL CRYOGENIQUE**
VERFAHREN ZUM BETREIBEN EINES KRYOGENEN TUNNELS
METHOD FOR OPERATING A CRYOGENIC TUNNEL

(30) Priorité: 25.04.2022 FR 2203801
(43) Date de publication de la demande: 01.11.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: PATHIER, Didier, Shanghai, 201108 (CN); REYMOND, Christian, 78350 Les Loges-En-Josas (FR); POUCHAIN, Olivier, 44476 Carquefou (FR); GAUBERT, Gilles, 75321 PARIS CEDEX 07 (FR)
(74) Mandataire: Air Liquide

(56) Documents cités:
- FR-A1- 2 855 597
- US-A- 5 606 861

## Description

La présente invention concerne un procédé et un dispositif de conduite d'un tunnel cryogénique, tunnel du genre dans lequel circulent des produits à refroidir ou surgeler, équipé de moyens d'injection d'un fluide cryogénique ainsi que de moyens d'extraction des gaz froids résultant de la vaporisation du fluide dans le tunnel.

Le document US-5 606 861 illustre l'état de ce domaine technique dans le cas des produits dits « IQF » (surgélation rapide de produits individuels tels fruits, légumes, boulettes etc....).

Dans cette industrie, les utilisateurs procèdent à l'ajustement des paramètres clés de fonctionnement du tunnel pour maintenir une production optimisée.

On trouve parmi ces paramètres la consigne de température régnant à l'intérieur du tunnel, la vitesse du convoyeur, et la vitesse des ventilateurs.

Ces paramètres, on le sait, influencent fortement la qualité des produits obtenus et le coût du procédé au travers de la consommation de cryogène, d'où l'importance de pouvoir optimiser ces paramètres.

Or on sait bien que les conditions d'opération de tels tunnels ne sont pas stables, elles varient en fonction des lots de produits traités : dans certains cas la température des produits entrant varie, dans d'autres cas l'épaisseur des produits varie d'un lot à un autre, tandis que dans d'autres cas le débit de produits à traiter ou encore la composition des produits change au cours de la journée.

Dans ce contexte, l'optimisation des paramètres de production est un objectif très complexe, et en pratique, les utilisateurs de tels tunnels ne parviennent pas à ajuster les paramètres de leur tunnel en continue au fil des productions, ils choisissent en fait d'adopter un réglage « moyen » qui est sensé couvrir à peu près correctement la plupart de leurs productions.

On observe ainsi par exemple le fait que durant une production donnée la puissance de refroidissement est trop élevée, la température des produits qui sortent du tunnel est alors trop basse, ce qui ne cause pas nécessairement une défaut de qualité selon les produits considérés.

Dans d'autres cas, la puissance de refroidissement est trop faible, la température des produits qui sortent du tunnel est alors trop élevée, ce qui cette fois cause un sérieux problème de qualité et d'acceptabilité des produits obtenus, et qui peut mener à l'élimination des produits en question, et la nécessité de relancer une production. C'est une des raisons pour laquelle les producteurs préfèrent par sécurité ajuster leur température de consigne légèrement trop basse, ce qui bien entendu représente un cout significatif.

Une solution à cette problématique serait d'ajuster en continu les conditions opératoires du tunnel pour que le produit soit refroidi ou surgelé juste au niveau souhaité, par exemple sur la base d'une mesure de température réalisée sur les produits en sortie de tunnel et une rétroaction sur les conditions d'alimentation en cryogène : si la température des produits en sortie est plus basse que la cible, la température du tunnel va être remontée, tandis que si la température des produits en sortie est trop élevée la température du tunnel va être rapidement abaissée.

Une autre solution pourrait être basée sur la température des produits entrant dans le tunnel : quand les produits arrivent à une température plus élevée que prévu, le tunnel se met en mode d'adoption d'une consigne plus basse, tandis que quand les produits arrivent à une température plus basse que prévu, le tunnel se met en mode d'adoption d'une consigne de température plus élevée, favorisant une consommation de cryogène diminuée.

La littérature de ce domaine évoque notamment les solutions techniques suivantes :
- Le système CALLIFREEZE^{®} de la société GEA, dans le domaine du froid mécanique (non cryogénique) où un contrôleur effectue cet ajustement en continu des paramètres du tunnel par un contrôle en continu du contenu d'eau cristallisée dans les produits, et en ajustant en conséquence le temps de séjour des produits dans le tunnel, la température de l'air intérieur au tunnel, et la vitesse des ventilateurs, pour atteindre le niveau de surgélation souhaité, ceci en minimisant la consommation d'énergie et en maintenant une qualité de produits optimum. Pour cela, une sonde est positionnée en sortie de tunnel, elle mesure le « taux de surgélation » des produits, en d'autres termes, quand x% de l'eau du produit est congelée alors il est considéré que x% du produit est surgelé. Ce taux est calculé à partir de mesures de microondes et à l'aide de tables de comparaison.
   Quand ce taux de surgélation est trop faible le contrôleur rétroagit sur la vitesse des ventilateur pour les augmenter, quand ce taux de surgélation est trop élevé alors on comprend que le tunnel apporte trop de frigories aux produits et consomme trop d'énergie, le contrôleur rétroagit alors sur la vitesse des ventilateur pour les diminuer.
- Le système décrit dans le document WO 2011/136900 A1 : ce système est basé sur une mesure de la quantité de produits entrant dans le tunnel, et sur l'utilisation d'un capteur infra-rouge mesurant la température d'un produit entrant, voire également des produits sortant, le contrôleur récupère alors l'ensemble de ces données pour calculer la quantité de cryogène qu'il convient d'injecter dans le tunnel pour réduire la température des produits sortant à un niveau souhaité.
- Le système décrit dans le document EP-3 170 404B1 : ce système est basé sur la mise en œuvre d'un laser scannant, à l'entrée du tunnel, pour acquérir une image en section d'un produit entrant, tandis qu'une sonde de température infra-rouge est positionnée en aval du laser à l'entrée, et qu'une seconde sonde infra-rouge est positionnée en sortie du tunnel.
Un contrôleur gère l'ensemble de ces capteurs et est apte à ajuster automatiquement le transfert thermique aux produits par une action sur l'arrivée de cryogène.

Si les solutions listées ci-dessus apportent incontestablement une amélioration au procédé et notamment à la qualité des produits obtenus, la Demanderesse considère pour sa part que des améliorations sont encore nécessaires, et que celles-ci peuvent être obtenues selon l'invention par l'approche suivante :
- Par la mesure de plusieurs paramètres clés du procédé.
- Par la répartition de ces paramètres dans deux groupes de paramètres différents, caractérisant le tunnel :
   - un premier groupe pour des paramètres qui peuvent et vont être utilisés pour anticiper la future puissance de surgélation nécessaire du tunnel. Ce premier groupe comprend par exemple un ou plusieurs paramètres parmi les paramètres suivants :
      o La température des produits entrant dans le tunnel
      o Le débit volumique des produits entrant
      o Le débit massique des produits entrant dans le tunnel
      o La couleur des produits entrant dans le tunnel
      o Le taux de couverture du tapis convoyeur alimentant le tunnel, ou encore
      o Des paramètres caractérisant l'atmosphère environnant le tunnel dans la pièce : température ambiante, humidité ambiante et pression atmosphérique.
      On comprend par exemple que si la température des produits arrivant à l'entrée du tunnel augmente, alors le tunnel aura besoin d'apporter plus de frigories. On cherchera alors à compenser le plus exactement possible la différence d'énergie des produits. A titre illustratif, si les produits ont normalement un niveau d'énergie de 100kcal/kg et qu'ils arrivent soudainement plus chauds avec une énergie de 122kcal/kg, on cherchera alors à compenser les 22 kcal/kg en plus par un apport de 22 k frigories/kg en plus à l'intérieur du tunnel.
   - Un second groupe de paramètres qui peuvent et vont être utilisés pour évaluer le résultat final des produits sortant (incluant la température des produits sortant du tunnel), paramètres qui vont notamment indiquer si le produit est correctement surgelé. Ce second groupe comprend par exemple un ou plusieurs paramètres parmi les paramètres suivants :
      o La température des produits sortant du tunnel (surgelés)
      o Le débit de cryogène admis dans le tunnel
      ∘ La température des gaz extraits du tunnel, typiquement au niveau de deux hottes d'extraction situées en entrée et sortie de tunnel
      ∘ La température régnant dans la pièce au voisinage de ces deux hottes d'extraction
      ∘ La dureté des produits sortant du tunnel
      ∘ La couleur des produits sortant du tunnel
      ∘ Le pourcentage des produits surgelés qui sont de type IQF (i.e individuels, type fruits, légumes, boulettes....). On pourra par exemple compter le nombre de particules de produit collées entre elles et faire le calcul suivant :
         pourcentage de produit IQF = 100 x nombre de particules non collées / nombre de particules total.
         Par particule, on entend ici par exemple un petit pois, un haricot, une framboise, une nuggets de poulet, une tranche de bacon, un morceau de poisson etc.....
- Par la mise en œuvre d'un des deux ou des deux types d'actions suivants sur la base des valeurs obtenues pour ces paramètres clés :
   - Des actions d'anticipation, calculées d'après les valeurs obtenues par le ou des paramètres du 1^{er} groupe (pour agir en amont sur une déviation anticipée/attendue de la qualité de surgélation, par exemple parce que la température des produits entrant est trop élevée) des actions anticipées c'est à dire des actions sur le tunnel avant même que le produit ne sorte trop chaud ou trop froid, en d'autres termes, rien ne sert par exemple d'attendre de mesurer des températures de produits surgelés sortants trop élevées en sortie de tunnel, il est possible d' anticiper une action de modification des paramètres du tunnel ; et
   - Des rétroactions (contre-mesures) calculées d'après les valeurs obtenues par le ou des paramètres du second groupe, pour rééquilibrer une dérive effective, mesurée, de la qualité des produits sortant, par exemple par le fait que la température des produit congelés en sortie du tunnel est trop chaude. Ainsi pour ces produits là (trop chauds) il est trop tard pour corriger le procédé et obtenir une bonne surgélation, mais il est possible d'ajuster un réglage plus froid du tunnel pour que les produits suivants sortent à une température satisfaisante.

Comme on le verra plus en détails dans ce qui suit, la présente invention permet de faire que l'équipement soit plus facile à utiliser : l'utilisateur règle sa température de produits congelés, -20°C par exemple, et le procédé selon la présente invention gère tout le reste, tout ce qui doit être géré.

L'utilisateur n'a plus à se demander : si j'ai un produit assez chaud qui entre dans le tunnel, le débit est assez élevé donc je dois mettre le tunnel plutôt à -110°C qu'à - 100°C ?, les ventilateurs plutôt à 90% qu'à 50% ?, l'extraction à X ou Y % ?.

Et lorsque les conditions de production évoluent, l'utilisateur n'a pas à s'occuper du tunnel, il va s'adapter seul pour conserver une température de produits surgelés à - 20°C.

On sait qu'un tunnel cryogénique comporte en général les éléments suivants :
- Un convoyeur des produits à l'intérieur du tunnel : la modification de la vitesse du convoyeur modifie le temps de séjour des produits et leur temps de surgélation .
- Un système d'injection du fluide cryogénique dans l'espace interne au tunnel, système par exemple constitué d'une vanne de réglage de l'arrivée de cryogène dans le tunnel, de canalisations et de plusieurs buses de pulvérisation du cryogène, ceci étant complété par un contrôleur apte à modifier le taux d'ouverture de la vanne pour rétablir la température interne au tunnel au niveau d'une consigne.
- Un système de ventilation organisant le transfert de frigories aux produits.
- Des moyens d'extraction à débit variable de tout ou partie des gaz froids résultant de la vaporisation du fluide dans le tunnel, avec traditionnellement le plus souvent une extraction en entrée et une extraction en sortie de tunnel.
- Une unité acquisition et de traitement de données, apte à recevoir des données de l'ensemble de ces dispositifs (vitesse du convoyeur, vitesse des ventilateurs, vitesse des extracteurs, sondes de température etc...) et à agir sur tout ou partie de ces dispositifs.

On peut par ailleurs disposer d'un ou plusieurs des dispositifs suivants et des données suivantes :
- d'un nombre donné et choisi de capteurs de distance, dont le rôle est de mesurer l'épaisseur de produits en différents points du convoyeur. Quand le convoyeur est vide de produits, la distance mesurée est nulle, tandis que quand un produit arrive en regard d'un capteur, ce capteur, au dessus du produit, mesure une distance qui est égale à l'épaisseur de ce produit (par différence).
- un contrôleur reçoit l'ensemble de ces mesures et calcule une épaisseur moyenne des produits présents sur le convoyeur.
- on n'utilise donc préférentiellement pas un laser scannant mais un groupe de plusieurs capteurs de distance permettant de couvrir de façon appropriée les dimensions du tunnel considéré, solution bien plus robuste (capteurs fixes n'ayant pas de pièces mobiles).
- d'une mesure de la vitesse du convoyeur.
- le contrôleur est alors en mesure d'effectuer l'évaluation suivante : (épaisseur moyenne produit) x (largeur du convoyeur) x (vitesse du convoyeur) = (débit volumique de produits)
- la température des produits entrant, par un dispositif disponible sur le marché pour cela.
- la température des produits sortant, ici encore par un dispositif disponible sur le marché pour cela.
- le débit de cryogène injecté dans le tunnel.
- la température des gaz extraits du tunnel, typiquement en entrée et en sortie de tunnel.
- la température ambiante dans la pièce abritant le tunnel (et notamment par exemple la température régnant au voisinage de deux hottes d'extraction en entrée et sortie de tunnel), ainsi que l'humidité ambiante et la pression atmosphérique dans cette pièce.
- comme mentionné ci-dessus on dispose avantageusement d'une unité d'acquisition et de traitement de données apte à recevoir toutes les données mesurées et à rétroagir pour toutes les actions nécessaires, notamment au rétablissement des consignes, cette unité (ordinateur, automate ou autre) peut être située au voisinage du tunnel dans la pièce, ou bien on peut adopter une configuration utilisant une telle unité locale pour renvoyer toutes les données sur un ordinateur délocalisé (réseau), ordinateur qui effectue tous les calculs et évaluations avant de renvoyer sur l'unité locale les résultats, unité locale qui effectue alors elle les actions nécessaires de modification des paramètres du tunnel selon l'invention.

Munis de ces deux groupes de paramètres bien distincts on construit une matrice pour chaque groupe, telles que celles que nous allons exemplifier ci-dessous afin de mieux comprendre l'invention :
- Le premier groupe de paramètres mesurés forment une entrée de la première matrice, premier groupe utilisé pour calculer et déclencher des actions par anticipation ;
- Le second groupe de paramètres mesurés forment une entrée de la seconde matrice, second groupe utilisé pour calculer et déclencher des actions par rétroaction ;

Comme cela est détaillé par la suite, les mesures obtenues pour l'un ou certains paramètres de ces deux groupes de paramètres nous permettent de calculer les ajustements à effectuer sur un groupe de paramètres d'actions (par anticipation et rétroactions), groupe d'actions constitué de :
∘ La vitesse du convoyeur
∘ La vitesse des ventilateurs internes au tunnel
∘ La température des gaz issus de la hotte d'entrée
∘ La température des gaz issus de la hotte de sortie
∘ La consigne de température régnant à l'intérieur du tunnel.

Et il faut alors noter que la deuxième entrée des deux matrices est constituée par le même groupe de paramètres qui est le groupe de paramètres d'actions évoqué ci-dessus.

Comme on le démontrera ci-dessous, l'invention, contrairement à l'art antérieur, agit non pas sur un seul paramètre (par exemple seulement sur la vitesse des ventilateur ou encore seulement sur le transfert thermique) mais sur plusieurs paramètres régissant le fonctionnement du tunnel.

Pour mieux comprendre l'invention, on trouve ci-dessous un exemple de première matrice constituée par le 1^{er} groupe de paramètres et par les actions d'anticipation exercées, chaque case de cette matrice étant constituée d'un facteur établissant un lien entre un paramètre donné et une action d'anticipation donnée (action par anticipation située dans ledit groupe d'actions listées ci-dessus).

Et l'on trouve également ci-dessous un exemple de seconde matrice constituée par le 2e groupe de paramètres et par les actions de « rétroaction » exercées, chaque case de cette matrice étant constituée d'un facteur établissant un lien entre un paramètre donné et une rétroaction donnée (rétroaction située dans ledit groupe d'actions listées ci-dessus).

### Matrice du 1^{er} groupe de paramètres (paramètres dits « d'anticipation »)

| | Vitesse convoyeur | Vitesse ventilateurs | Température gaz hotte entrée | Température gaz hotte sortie | Consigne de température à l'intérieur du tunnel |
|---|---|---|---|---|---|
| Température produits Entrants | x11 | x21 | x31 | x41 | x51 |
| Débit de produits entrants | x12 | x22 | x32 | x42 | x52 |
| Température ambiante | x13 | x23 | x33 | x43 | x53 |
| Humidité ambiante | x14 | x24 | x34 | x44 | x54 |
| Pression atmosphérique | x15 | x25 | x35 | x45 | x55 |

### Matrice du 2d groupe de paramètres (paramètres dits « de rétroaction »)

| | Vitesse convoyeur | Vitesse ventilateurs | Température gaz hotte entrée | Température gaz hotte sortie | Consigne de température a l'intérieur du tunnel |
|---|---|---|---|---|---|
| Température produits sortant | y11 | y21 | y31 | y41 | y51 |
| Débit cryogène injecté | y12 | y22 | y32 | y42 | y52 |
| Température gaz hotte entrée | y13 | y23 | y33 | y43 | y53 |
| Température gaz hotte sortie | y14 | y24 | y34 | y44 | y54 |
| Température au voisinage hotte entrée | y15 | y25 | y35 | y45 | y55 |
| Température au voisinage hotte sortie | y16 | y26 | y36 | y46 | y56 |

Et l'on notera que si le contenu de certaines cases est mis à zéro, dans leur cas on doit comprendre il n'y a pas d'action ou de rétroaction à engager.

Exemplifions dans ce qui suit les actions qui peuvent être engagées :
o Si la case dite x11 est à -3, alors quand la température du produit entrant est égale à 5°C, plus élevée que la consigne, le système va automatiquement adapter la vitesse du convoyeur par 5 x (-3) = -15 unités (par exemple -15%). En conséquence, pour un produit entrant plus chaud que ce qui était attendu, le tunnel va, par anticipation, engager une réduction de la vitesse du convoyeur et un temps de surgélation plus élevé. En d'autres termes, la température plus élevée d'un produit entrant va être automatiquement anticipée et contrebalancée par le système.

Et le même type d'action va être défini dans la matrice pour chaque couple de paramètres.

Et si l'on décide, dans un couple de paramètres donné (une case donnée), que l'on ne souhaite aucune action , alors le paramètre de liaison va être mis à zéro (par exemple on décide de mettre X12 à zéro et ainsi des variations de débit de produits n'entraineront aucune action sur la vitesse du convoyeur). Cela peut par exemple être le cas lorsque l'on désire que le convoyeur fonctionne à vitesse constante. Dans ce cas, tous les paramètres de la matrice ayant un impact sur la vitesse du convoyeur seront mis à zéro. Dans notre exemple précédant, x11 sera ajusté à zéro.

Pour le second groupe de paramètres (seconde matrice), le fonctionnement va être exemplifié ci-dessous.

Ainsi par exemple si Y51 = -0.5, le système procèdera alors à l'action suivante : si un produit sortant du tunnel a une température de 6°C, plus élevée que la consigne fixée, le tunnel va alors automatiquement ajuster la température à l'intérieur du tunnel de 6 x (-0.5) = 3°C i.e en faisant décroitre la consigne de 3°C par minute, pas à pas. La température des produits sortants va ainsi décroitre pas à pas, jusqu'à atteindre la consigne requise en sortie. Lorsque la consigne requise sera obtenue, le système se stabilise et la consigne de température dans le tunnel sera elle aussi stabilisée à la valeur qui permet d'obtenir le refroidissement optimal du produit.

A nouveau, si l'on souhaite n'engager aucune action sur un couple de paramètres donné, on fixe la case correspondante de la matrice à zéro, par exemple si la case Y22 est fixée à zéro, une variation sur le débit de cryogène injecté n'entrainera aucune action sur la vitesse des ventilateurs.

On le voit donc, dans les exemples donnés ici, les actions sont calculées différemment mais elles agissent sur le même groupe de paramètres d'actions, que ce soit pour les actions par anticipation ou les actions par rétroaction.

Que l'on détecte que les produits arrivent trop chauds (on peut alors envisager de diminuer la température du tunnel par anticipation) ou que les produits sortent trop froid (on peut alors envisager de diminuer la température du tunnel par rétroaction pour que les produits qui suivent soient à la bonne température), l'action est la même.

En d'autres termes, il peut y avoir deux causes/origines différentes pour modifier un seul paramètre de tunnel.

A contrario, on peut aussi observer un seul paramètre qui entraîne la modification de plusieurs paramètres du tunnel.

Comme il apparaitra clairement à l'homme du métier, les matrices présentées ici peuvent être établies pour un nombre plus restreint de paramètres, ou pour un nombre plus élevé de paramètres, en ajoutant des paramètres non listés ici, par exemple pour traiter des tunnels munis de plus qu'un seul convoyeur, ou encore avec plusieurs zones de températures et donc plusieurs consignes de températures.

On décrit dans ce qui suit un exemple de détermination expérimentale des valeurs constituant les cases des deux matrices décrites ci-dessus.

Pour cela, pour remplir une case, c'est-à-dire déterminer le facteur occupant la case en question, une démarche pas à pas est effectuée.

Considérons l'exemple du facteur y51 qui établit une relation entre la température de consigne du surgélateur et la température des produits en sortie de surgélateur.

Etape 1: l'utilisateur met l'appareil en fonctionnement avec des produits. Pour une bonne réussite de cette procédure de réglage, il est préférable voire indispensable que le procédé soit le plus stable possible, que le débit et la température des produits à congeler soient stables, que les paramètres du surgélateur (vitesse des ventilateurs, vitesse du tapis, vitesse d'extraction) soient stables également.

**Etape 2:** Quand le procédé de surgélation fonctionne de manière stable, le système de régulation objet de la présente invention est mis en fonctionnement et une température de cible pour les produits surgelés en sortie du surgélateur est définie en fonction du besoin du client. Pour les produits surgelés, on prendra souvent une température cible de -20°C.

La température du produit surgelé est alors surveillée par l'utilisateur. De préférence, cette température est enregistrée et la courbe est construite en direct.

Etape 3: le paramètre y51 est ajusté à une valeur choisie arbitrairement, 1 par exemple. Tous les autres paramètres sont ajustés à zéro pour ne pas créer d'interférence entre les boucles de régulation.

Etape 4: l'utilisateur regarde alors le comportement de la courbe de température du produit surgelé durant au moins un temps équivalent à 4 fois le temps de passage du produit dans le surgélateur :
o cas A : la température varie au-dessus et en dessous de la consigne. L'amplitude de la variation diminue rapidement au fil des passages et la température finit par se stabiliser très proche de la consigne. Dans ce cas, l'utilisateur passe à l'étape 5
o cas B: la courbe de température reste inférieure à la consigne. L'utilisateur double la valeur de y51. Si y51 était égal à 1, il passe à 2. Puis l'utilisateur retourne au début de l'étape 4.
o cas C: la courbe de température reste supérieure à la consigne. L'utilisateur double la valeur de y51. Si y51 était égal à 1, il passe à 2. Puis l'utilisateur retourne au début de l'étape 4......
o cas D: la courbe de température n'est pas stable, elle passe au-dessus et en dessous de la consigne avec une amplitude stable ou croissante. L'utilisateur divise y51 par deux. Si y51 était égal à 1, il passe à 0.5. Puis l'utilisateur retourne au début de l'étape 4.
o cas E: la courbe de température n'est pas stable, elle passe au-dessus et en dessous de la consigne avec une amplitude qui diminue très lentement. L'utilisateur multiplie y51 par 0.7 (équivalent à -30%). Si y51 était égal à 1, il passe à 0.7. Puis l'utilisateur retourne au début de l'étape 4.

Etape 5: l'utilisateur change la température de consigne des produits surgelés et regarde alors le comportement de la courbe de température du produit surgelé durant au moins un temps équivalent à 4 fois le temps de passage du produit dans le surgélateur :
o cas F: la température varie au-dessus et en dessous de la consigne. L'amplitude de la variation diminue rapidement et la température finit par se stabiliser très proche de la consigne. Dans ce cas, l'utilisateur a déterminé avec précision la valeur de y51, paramètre permettant d'établir une relation de régulation entre le couple de paramètres décrit précédemment.
∘ cas G: si l'utilisateur n'est pas dans le cas F, alors il reprend la procédure depuis le début de l'étape 4.

La même procédure pourra être appliquée à tous les paramètres X ou Y de régulation des matrices de la présente invention, c'est -à -dire à tous les couples de paramètres du procédé. L'utilisateur déroulera la même procédure en ajustant un par un chaque paramètre X ou Y en prenant soin d'ajuster tous les autres paramètres à 0 en début de procédure.

Lorsque toute cette démarche est terminée, tous les paramètres de régulation X du procédé auront été déterminés.

Une régulation optimale du fonctionnement du surgélateur sera alors obtenue.

Continuons dans ce qui suit à illustrer l'invention par un exemple concret : comme on l'a déjà mentionné, lorsqu'un tunnel cryogénique fonctionne chez un site producteur, de nombreux paramètres peuvent changer en même temps, et tous ces paramètres ont un impact sur la surgélation réalisée.

Si par exemple, le débit de produits entrant augmente de 20% et passe à titre illustratif de 1000 à 1200 kg/h. Si en même temps, la température du produit diminue de telle sorte que le produit ait besoin de 5% de moins de froid (par exemple 95 calories/kg à la place de 100).

On peut alors considérer qu'au global, le tunnel va devoir fournir 1200 x 95 = 114 000 équivalent puissance contre 100 000 avant. Il faut donc qu'il apporte 14% de plus d'énergie.

Résumons ci-dessous ce qui va alors intervenir selon la solution choisie par l'utilisateur du tunnel :
- solution N°1 basique de l'art antérieur sans rétroaction (système le plus répandu) : le tunnel va fonctionner avec une puissance inchangée de 100% et le produit sera donc insuffisamment congelé de 14% ;
- solution N°2 comportant une mesure de la température du produit entrant : le système va détecter une plus faible demande de froid car le produit arrive plus froid, il va réduire la puissance du tunnel de 5% et il va alors manquer 19% de froid au produit. On voit ici que l'action sur un seul paramètre a un impact négatif et en tout état de cause moins favorable que la solution basique N°1.
- solution N°3 comportant une mesure du débit de produit entrant : le système va détecter une augmentation du débit de 20% et va déclencher une augmentation de la puissance du surgélateur de 20%. Le produit sera alors trop froid en sortie et la surconsommation peut être évaluée à 6%. Le produit sera néanmoins correct mais cette solution entraine un surcoût de production de 6%.
- solution N°4 selon la présente invention : le système mesure la température des produits entrant et le débit de produits entrant (et le cas échéant d'autres paramètres), le système va alors constater des modifications de deux paramètres à la fois, il va faire les calculs nécessaires et trouver que la résultante de ces deux modifications équivaut à une augmentation de puissance nécessaire de 14%. Il va donc augmenter la puissance du surgélateur de 14%, exactement ce dont a besoin le procédé. Le produit sortira donc correctement congelé, à la bonne température, et sans surconsommation.

L'invention pourra par ailleurs adopter l'un ou plusieurs des modes de réalisation suivants :
- on effectue les transferts de tout ou partie des mesures effectuées vers des banques de données délocalisées ;
- on effectue un traitement de ces données ainsi stockées à distance pour fournir :
   i) une information concernant l'efficacité du procédé de surgélation ;
   j) une analyse dynamique du tunnel de surgélation permettant de fournir notamment des dérives de fonctionnements, ou encore des alertes de maintenances, etc...

La présente invention concerne alors un procédé de conduite d'un tunnel cryogénique dans lequel circulent des produits à refroidir ou surgeler, tunnel qui est équipé de moyens d'injection d'un fluide cryogénique ainsi que de moyens d'extraction à débit variable de tout ou partie des gaz froids résultant de la vaporisation dudit fluide dans le tunnel, se caractérisant en ce que :
- On dispose de mesures de plusieurs paramètres qualifiant le procédé.
- On procède à la répartition de ces paramètres dans deux groupes de paramètres différents, caractérisant le tunnel :
   - un premier groupe constitué par des paramètres mesurés qui peuvent être utilisés pour anticiper la future puissance de surgélation nécessaire du tunnel, premier groupe qui comprend un ou plusieurs paramètres parmi les paramètres suivants :
      ∘ La température des produits entrant dans le tunnel
      ∘ Le débit volumique des produits entrant
      ∘ Le débit massique des produits entrant dans le tunnel
      ∘ La couleur des produits entrant dans le tunnel
      ∘ Le taux de couverture du tapis convoyeur alimentant le tunnel ou encore
      ∘ Des paramètres caractérisant l'atmosphère environnant le tunnel dans la pièce : température ambiante, humidité ambiante et pression atmosphérique.
   - Un second groupe de paramètres mesurés qui vont être utilisés pour évaluer le résultat final des produits sortant, paramètres qui vont notamment indiquer si le produit est correctement surgelé, ce second groupe comprenant un ou plusieurs paramètres parmi les paramètres suivants :
      ∘ La température des produits sortant du tunnel
      ∘ Le débit de cryogène admis dans le tunnel
      o La température des gaz extraits du tunnel, typiquement au niveau de deux hottes d'extraction situées en entrée et sortie de tunnel
      ∘ La température régnant dans la pièce au voisinage de ces deux hottes d'extraction
      ∘ La dureté des produits sortant du tunnel
      ∘ La couleur des produits sortant du tunnel
      ∘ Le pourcentage des produits surgelés qui sont de type IQF
- On procède à la mise en œuvre de deux types d'actions sur ces paramètres :
   - Des actions d'anticipation calculées d'après les valeurs obtenues pour le ou des paramètres du 1^{er} groupe, pour agir en amont sur une déviation anticipée/attendue de la qualité de surgélation, par exemple parce que la température des produits entrant est trop élevée par rapport à une consigne donnée, des actions anticipées c'est à dire des actions sur le tunnel avant même que le produit ne sorte par exemple trop chaud ou trop froid, i.e des actions de modification de paramètres du tunnel ; et
   - Des rétroactions (contre-mesures) calculées d'après les valeurs obtenues pour le ou des paramètres du second groupe, pour rééquilibrer une dérive effective, mesurée, de la qualité des produits sortant, par exemple par le fait que la température des produits en sortie du tunnel est trop élevée par rapport à une température cible donnée ;

les actions, d'anticipation ou rétroactions, étant déterminées par les sorties des deux matrices suivantes régissant les dites actions :
   - Ledit premier groupe de paramètres mesurés forment une entrée d'une première matrice, premier groupe utilisé pour déclencher des actions par anticipation ;
   - Ledit second groupe de paramètres mesurés forment une entrée d'une seconde matrice, second groupe utilisé pour déclencher des actions par rétroaction ;
les mesures obtenues pour l'un ou certains paramètres de ces deux groupes de paramètres permettant de calculer les ajustements à effectuer sur le groupe de paramètres d'actions (par anticipation et/ou rétroactions) constitué de :
   ∘ La vitesse du convoyeur
   ∘ La vitesse des ventilateurs internes au tunnel
   ∘ La température des gaz issus de la hotte d'entrée
   ∘ La température des gaz issus de la hotte de sortie
   ∘ La consigne de température régnant à l'intérieur du tunnel.
la deuxième entrée des deux matrices étant constituée par ledit groupe de paramètres d'actions, et en ce que l'on a procédé à la détermination des valeurs constituant les cases des deux matrices par voie expérimentale, chaque case de ces matrices étant constituée d'un facteur établissant un lien respectivement entre un paramètre donné du premier groupe et une action d'anticipation donnée, et un paramètre donné du second groupe et une rétroaction donnée.

## Revendications

1. Un procédé de conduite d'un tunnel cryogénique dans lequel circulent des produits à refroidir ou surgeler, tunnel qui est équipé de moyens d'injection d'un fluide cryogénique ainsi que de moyens d'extraction à débit variable de tout ou partie des gaz froids résultant de la vaporisation dudit fluide dans le tunnel, **se caractérisant en ce que** :
- On dispose de mesures de plusieurs paramètres qualifiant le procédé.
- On procède à la répartition de ces paramètres dans deux groupes de paramètres différents, caractérisant le tunnel :
• un premier groupe constitué par des paramètres mesurés qui peuvent être utilisés pour anticiper la future puissance de surgélation nécessaire du tunnel, premier groupe qui comprend un ou plusieurs paramètres parmi les paramètres suivants :
∘ La température des produits entrant dans le tunnel
∘ Le débit volumique des produits entrant
∘ Le débit massique des produits entrant dans le tunnel
∘ La couleur des produits entrant dans le tunnel
∘ Le taux de couverture du tapis convoyeur alimentant le tunnel ou encore
∘ Des paramètres caractérisant l'atmosphère environnant le tunnel dans la pièce : température ambiante, humidité ambiante et pression atmosphérique.
• Un second groupe constitué par des paramètres mesurés qui vont être utilisés pour évaluer le résultat final des produits sortant, paramètres qui vont notamment indiquer si le produit est correctement surgelé, ce second groupe comprenant un ou plusieurs paramètres parmi les paramètres suivants :
∘ La température des produits sortant du tunnel
∘ Le débit de cryogène admis dans le tunnel
∘ La température des gaz extraits du tunnel, typiquement au niveau de deux hottes d'extraction situées en entrée et sortie de tunnel
∘ La température régnant dans la pièce au voisinage de ces deux hottes d'extraction
∘ La dureté des produits sortant du tunnel
∘ La couleur des produits sortant du tunnel
∘ Le pourcentage des produits surgelés qui sont de type IQF
- On procède à la mise en œuvre de deux types d'actions sur ces paramètres :
• Des actions d'anticipation calculées d'après les valeurs obtenues pour le ou des paramètres du 1^{er} groupe, pour agir en amont sur une déviation anticipée/attendue de la qualité de surgélation, par exemple parce que la température des produits entrant est trop élevée par rapport à une consigne donnée ; et
• Des rétroactions (contre-mesures) calculées d'après les valeurs obtenues pour le ou des paramètres du second groupe, pour rééquilibrer une dérive effective, mesurée, de la qualité des produits sortant, par exemple par le fait que la température des produits en sortie du tunnel est trop élevée par rapport à une température cible donnée ;
les actions, d'anticipation ou rétroactions, étant déterminées par les sorties des deux matrices suivantes régissant les dites actions :
• Ledit premier groupe de paramètres mesurés forment une entrée d'une première matrice, premier groupe utilisé pour déclencher des actions par anticipation ;
• Ledit second groupe de paramètres mesurés forment une entrée d'une seconde matrice, second groupe utilisé pour déclencher des actions par rétroaction ;
les mesures obtenues pour l'un ou certains paramètres de ces deux groupes de paramètres permettant de calculer les ajustements à effectuer sur le groupe de paramètres d'actions (par anticipation et/ou rétroactions) constitué de :
∘ La vitesse du convoyeur
∘ La vitesse des ventilateurs internes au tunnel
∘ La température des gaz issus de la hotte d'entrée
∘ La température des gaz issus de la hotte de sortie
∘ La consigne de température régnant à l'intérieur du tunnel.
la deuxième entrée des deux matrices étant constituée par ledit groupe de paramètres d'actions, et **en ce que** l'on a procédé à la détermination des valeurs constituant les cases des deux matrices par voie expérimentale, chaque case de ces matrices étant constituée d'un facteur établissant un lien respectivement entre un paramètre donné du premier groupe et une action d'anticipation donnée, et un paramètre donné du second groupe et une rétroaction donnée.

2. Procédé de conduite selon la revendication 1, **se caractérisant en ce que** :
- ledit premier groupe de paramètres comprend au moins deux paramètres parmi les paramètres suivants :
∘ La température des produits entrant dans le tunnel
∘ Le débit volumique des produits entrant
∘ Le débit massique des produits entrant dans le tunnel
∘ La couleur des produits entrant dans le tunnel
∘ Le taux de couverture du tapis convoyeur alimentant le tunnel ou encore
∘ Des paramètres caractérisant l'atmosphère environnant le tunnel dans la pièce : température ambiante, humidité ambiante et pression atmosphérique.
et **en ce que** :
- ledit second groupe de paramètres comprend au moins deux paramètres parmi les paramètres suivants :
∘ La température des produits sortant du tunnel
∘ Le débit de cryogène admis dans le tunnel
∘ La température des gaz extraits du tunnel, typiquement au niveau de deux hottes d'extraction situées en entrée et sortie de tunnel
∘ La température régnant dans la pièce au voisinage de ces deux hottes d'extraction
∘ La dureté des produits sortant du tunnel
∘ La couleur des produits sortant du tunnel
∘ Le pourcentage des produits surgelés qui sont de type IQF

## Patentansprüche

1. Verfahren zum Betrieb eines kryogenen Tunnels, in dem zu kühlende oder tiefzukühlende Produkte zirkulieren, wobei dieser Tunnel mit Mitteln zur Injektion eines kryogenen Fluids sowie mit Mitteln zur Extraktion des gesamten oder eines Teils der kalten Gase, die aus der Verdampfung des Fluids im Tunnel resultieren, ausgestattet ist, **dadurch gekennzeichnet, dass**:
Messungen mehrerer den Prozess qualifizierender Parameter verfügbar sind.
Diese Parameter werden in zwei verschiedene Parametergruppen aufgeteilt, die den Tunnel charakterisieren:
• eine erste Gruppe, bestehend aus gemessenen Parametern, die verwendet werden können und werden, um die zukünftige erforderliche Tiefkühlleistung des Tunnels zu antizipieren, wobei diese erste Gruppe einen oder mehrere der folgenden Parameter umfasst:
∘ Die Temperatur der in den Tunnel eintretenden Produkte
∘ Das volumetrische Durchfluss der eintretenden Produkte
∘ Das Massendurchfluss der eintretenden Produkte
∘ Die Farbe der in den Tunnel eintretenden Produkte
∘ Der Bedeckungsgrad des den Tunnel speisenden Förderbandes oder
∘ Parameter, die die Atmosphäre um den Tunnel im Raum charakterisieren: Umgebungstemperatur, Umgebungsfeuchtigkeit und atmosphärischer Druck.
• Eine zweite Gruppe, bestehend aus gemessenen Parametern, die zur Bewertung des Endergebnisses der austretenden Produkte verwendet werden, wobei diese Parameter insbesondere anzeigen, ob das Produkt ordnungsgemäß tiefgekühlt ist, wobei diese zweite Gruppe einen oder mehrere der folgenden Parameter umfasst:
∘ Die Temperatur der den Tunnel verlassenden Produkte
∘ Der in den Tunnel eingeleitete Kryogenfluss
∘ Die Temperatur der aus dem Tunnel entnommenen Gase, typischerweise auf Höhe von zwei Absaughauben am Tunneleingang und -ausgang
∘ Die im Raum in der Nähe dieser beiden Absaughauben herrschende Temperatur
∘ Die Härte der den Tunnel verlassenden Produkte
∘ Die Farbe der den Tunnel verlassenden Produkte
o Der Prozentsatz der tiefgekühlten Produkte vom IQF-Typ
Die Durchführung zweier Arten von Maßnahmen an diesen Parametern erfolgt:
• Antizipationsmaßnahmen, berechnet aus den für den oder die Parameter der 1. Gruppe erhaltenen Werten, um im Voraus auf eine antizipierte/erwartete Abweichung der Tiefkühlqualität zu reagieren, zum Beispiel, weil die Temperatur der eintretenden Produkte im Verhältnis zu einem gegebenen Sollwert zu hoch ist; und
• Rückkopplungsmaßnahmen (Gegenmaßnahmen), berechnet aus den für den oder die Parameter der zweiten Gruppe erhaltenen Werten, um eine tatsächliche, gemessene Abweichung der Qualität der austretenden Produkte auszugleichen, zum Beispiel aufgrund der Tatsache, dass die Temperatur der Produkte am Tunnelausgang im Verhältnis zu einer gegebenen Zieltemperatur zu hoch ist;
wobei die Antizipations- oder Rückkopplungsmaßnahmen durch die Ausgaben der folgenden beiden Matrizen bestimmt werden, die diese Aktionen steuern:
• Die besagte erste Gruppe von gemessenen Parametern bildet einen Eingang einer ersten Matrix, wobei die erste Gruppe verwendet wird, um Antizipationsmaßnahmen auszulösen;
• Die besagte zweite Gruppe von gemessenen Parametern bildet einen Eingang einer zweiten Matrix, wobei die zweite Gruppe verwendet wird, um Rückkopplungsmaßnahmen auszulösen;
die für einen oder bestimmte Parameter dieser beiden Parametergruppen erhaltenen Messwerte ermöglichen die Berechnung der anzupassenden Einstellungen an der Gruppe der Aktionsparameter (durch Antizipation und/oder Rückkopplung), bestehend aus:
o Die Geschwindigkeit des Förderers
o Die Geschwindigkeit der internen Tunnelventilatoren
o Die Temperatur der Gase aus der Eintrittshaube
o Die Temperatur der Gase aus der Austrittshaube
o Der Sollwert der Temperatur im Tunnelinneren.
wobei der zweite Eingang der beiden Matrizen durch die besagte Gruppe von Aktionsparametern gebildet wird, und dadurch, dass die Bestimmung der Werte, die die Felder der beiden Matrizen bilden, experimentell erfolgte, wobei jedes Feld dieser Matrizen aus einem Faktor besteht, der eine Verbindung jeweils zwischen einem gegebenen Parameter der ersten Gruppe und einer gegebenen Antizipationsaktion, und einem gegebenen Parameter der zweiten Gruppe und einer gegebenen Rückkopplungsaktion herstellt.

2. Verfahren zum Betrieb nach Anspruch 1, **dadurch gekennzeichnet, dass**:
- die besagte erste Parametergruppe mindestens zwei Parameter aus den folgenden Parametern umfasst:
∘ Die Temperatur der in den Tunnel eintretenden Produkte
∘ Das volumetrische Durchfluss der eintretenden Produkte
∘ Das Massendurchfluss der eintretenden Produkte
∘ Die Farbe der in den Tunnel eintretenden Produkte
∘ Der Bedeckungsgrad des den Tunnel speisenden Förderbandes oder
∘ Parameter, die die Atmosphäre um den Tunnel im Raum charakterisieren: Umgebungstemperatur, Umgebungsfeuchtigkeit und atmosphärischer Druck.
und dadurch, dass:
- die besagte zweite Parametergruppe mindestens zwei Parameter aus den folgenden Parametern umfasst:
∘ Die Temperatur der den Tunnel verlassenden Produkte
∘ Der in den Tunnel eingeleitete Kryogenfluss
∘ Die Temperatur der aus dem Tunnel entnommenen Gase, typischerweise auf Höhe von zwei Absaughauben am Tunneleingang und -ausgang
∘ Die im Raum in der Nähe dieser beiden Absaughauben herrschende Temperatur
∘ Die Härte der den Tunnel verlassenden Produkte
∘ Die Farbe der den Tunnel verlassenden Produkte
∘ Der Prozentsatz der tiefgekühlten Produkte vom IQF-Typ

## Claims

1. A method for operating a cryogenic tunnel in which products to be cooled or frozen circulate, which tunnel is equipped with means for injecting a cryogenic fluid as well as means for extracting all or part of the cold gases resulting from the vaporization of said fluid in the tunnel, **characterized in that**:
Measurements of several parameters qualifying the method are available.
These parameters are distributed into two different groups of parameters, characterizing the tunnel:
• a first group consisting of measured parameters that can and will be used to anticipate the future freezing power required by the tunnel, this first group comprising one or more parameters from the following parameters:
∘ The temperature of products entering the tunnel
∘ The volumetric flow rate of products entering
∘ The mass flow rate of products entering the tunnel
∘ The color of products entering the tunnel
∘ The coverage rate of the conveyor belt feeding the tunnel or
∘ Parameters characterizing the atmosphere surrounding the tunnel in the room: ambient temperature, ambient humidity and atmospheric pressure.
• A second group consisting of measured parameters that will be used to evaluate the final result of outgoing products, parameters that will notably indicate whether the product is properly frozen, this second group comprising one or more parameters from the following parameters:
∘ The temperature of products leaving the tunnel
∘ The cryogenic flow rate admitted into the tunnel
∘ The temperature of gases extracted from the tunnel, typically at the level of two extraction hoods located at the entrance and exit of the tunnel
∘ The temperature prevailing in the room near these two extraction hoods
∘ The hardness of products leaving the tunnel
∘ The color of products leaving the tunnel
∘ The percentage of IQF-type frozen products
Two types of actions are implemented on these parameters:
• Anticipation actions calculated from the values obtained for the parameter(s) of the 1st group, to act upstream on an anticipated/expected deviation in freezing quality, for example because the temperature of the incoming products is too high compared to a given setpoint; and
• Feedback actions (counter-measures) calculated from the values obtained for the parameter(s) of the second group, to rebalance an effective, measured deviation in the quality of the outgoing products, for example due to the fact that the temperature of the products at the tunnel exit is too high compared to a given target temperature;
the anticipation or feedback actions being determined by the outputs of the following two matrices governing said actions:
• Said first group of measured parameters forms an input of a first matrix, the first group used to trigger anticipation actions;
• Said second group of measured parameters forms an input of a second matrix, the second group used to trigger feedback actions;
the measurements obtained for one or certain parameters of these two groups of parameters allowing the calculation of adjustments to be made to the group of action parameters (by anticipation and/or feedback) consisting of:
∘ The conveyor speed
∘ The speed of internal tunnel fans
∘ The temperature of gases from the entry hood
∘ The temperature of gases from the exit hood
∘ The temperature setpoint inside the tunnel.
the second input of the two matrices being constituted by said group of action parameters, and **in that** the determination of the values constituting the cells of the two matrices was carried out experimentally, each cell of these matrices being constituted by a factor establishing a link respectively between a given parameter of the first group and a given anticipation action, and a given parameter of the second group and a given feedback action.

2. A method of operation according to claim 1, **characterized in that**:
- said first group of parameters comprises at least two parameters from the following parameters:
∘ The temperature of products entering the tunnel
∘ The volumetric flow rate of products entering
∘ The mass flow rate of products entering the tunnel
∘ The color of products entering the tunnel
∘ The coverage rate of the conveyor belt feeding the tunnel or
∘ Parameters characterizing the atmosphere surrounding the tunnel in the room: ambient temperature, ambient humidity and atmospheric pressure.
and **in that**:
- said second group of parameters comprises at least two parameters from the following parameters:
∘ The temperature of products leaving the tunnel
∘ The cryogenic flow rate admitted into the tunnel
∘ The temperature of gases extracted from the tunnel, typically at the level of two extraction hoods located at the entrance and exit of the tunnel
∘ The temperature prevailing in the room near these two extraction hoods
∘ The hardness of products leaving the tunnel
∘ The color of products leaving the tunnel
∘ The percentage of IQF-type frozen products
